# EUROPÄISCHE PATENTANMELDUNG

(11) **EP 1 536 118 A1**
(43) Veröffentlichungstag der Anmeldung: **01.06.2005**
(21) Anmeldenummer: 03104359.9
(22) Anmeldetag: 25.11.2003
(51) Int. Cl.: F02C 6/06, F02C 6/16, F02C 9/16

(54) **Kraftwerksanlage**

(71) Anmelder: Alstom Technology Ltd, 5400 Baden (CH)
(72) Erfinder: Althaus, Rolf Dr., 9230 Flawll (CH); Koller, Martin, 5316 Gippingen (CH); Wiederhold, Karl, 76646 Bruchsal (DE)

(57) **Zusammenfassung**

Eine Gasturbogruppe (1) wird mit einem Druckgasspeicher (4) derart kombiniert, dass zur temporären Leistungssteigerung Druckgas aus dem Druckgasspeicher stromab des Kompressors (101) der Gasturbogruppe (1) in deren Strömungsweg einspeisbar ist. Damit kann der Turbinen-Massenstrom erhöht werden, ohne dass der Verdichter nennenswerte Mehrarbeit leisten muss, beziehungsweise kann bei gleichem Turbinen-Massenstrom der Verdichter-Massenstrom reduziert werden. Selbstverständlich ist auch eine Kombination dieser Maßnahmen möglich. Auf diese Weise wird die Netto-Leistungsabgabe der Gasturbogruppe erhöht.

## Beschreibung

### Technisches Gebiet

Die vorliegende Erfindung betrifft eine Kraftwerksanlage, insbesondere zur Stromerzeugung, sowie ein zugehöriges Betriebsverfahren.

### Stand der Technik

Die Deckung von Spitzenlastbedarf, die bloße Vorhaltung von Kapazitäten zur schnellen Leistungsbereitstellung sowie die Bereitstellung der Fähigkeit zur Blindleistungsregelung stellen in den heutigen Strommärkten lukrative Einnahmequellen dar. Hierzu werden einerseits Anlagen etwas unterhalb ihrer Volllastleistung betrieben, was allerdings in einem dauerhaft nicht optimalen Wirkungsgrad und einer ebenfalls suboptimalen Resourcen- und Kapitalnutzung resultiert. Sehr attraktiv sind daher Kraftwerksanlagen, welche eine temporäre Leistungssteigerung bei leicht vermindertem Wirkungsgrad ermöglichen.

Grundsätzlich kann die Leistungsabgabe von Gasturbogruppen erhöht werden, indem Wasser und/oder Dampf in den Heissgaspfad der Gasturbogruppe stromab des Verdichters eingebracht wird. hierdurch erhöhen sich der Massenstrom durch die Turbine und das Druckverhältnis, was in einer Steigerung der Netto-Leistungsabgabe der Gasturbogruppe resultiert, da der Zusatz-Massenstrom nicht vom Verdichter komprimiert werden muss. Nachteilig zeigt sich hierbei der Verbrauch an demineralisiertem Wasser, welches erst bereitgestellt werden muss, was, je nach Standort und Ausführung der Kraftwerksanlage, einen erheblichen Anlagenaufwand für die Wasseraufbereitung oder auch logistischen Aufwand für die Bereitstellung von Rohwasser bedingt, weshalb die Wasser- und/oder Dampfeinspritzung nicht immer unproblematisch als Mittel zur Leistungssteigerung eingesetzt werden kann.

### Darstellung der Erfindung

Hier will die Erfindung Abhilfe schaffen. Der in den Ansprüchen gekennzeichneten Erfindung liegt die Aufgabe zugrunde, eine Kraftwerksanlage und ein Verfahren der eingangs genannten Art anzugeben, welche die Nachteile des Standes der Technik zu vermeiden vermögen.

Diese Aufgabe wird erfindungsgemäß durch die Gegenstände der unabhängigen Ansprüche gelöst. Vorteilhafte Ausführungsformen sind Gegenstand der abhängigen Ansprüche.

Kern der Erfindung ist es also, einer herkömmlichen Standard-Gasturbogruppe einen Druckgasspeicher nebenzuordnen und Mittel vorzusehen, stromab des Kompressors einen Gasmassenstrom aus dem Druckgasspeicher in den Strömungsweg der Gasturbogruppe einzuleiten. Als Druckgas oder Speichergas wird vorzugsweise Luft verwendet.

In einer ersten Ausführungsform erfolgt diese Einleitung des Druckgases bzw. der Druckluft stromab des Verdichters und stromauf einer Brennkammer oder einer anderen Einrichtung zur Wärmezufuhr. Alternativ oder zusätzlich kann Gas oder Luft aus dem Speichervolumen über ein Kühlgas- bzw. Kühlluftsystem eingeleitet werden, aus dem es dann in den Strömungsweg der Gasturbogruppe einströmt. Dabei wird die gesamte oder ein Teil des Kühlgases bzw. der Kühlluft aus dem Speichervolumen bereitgestellt und muss also nicht mehr vom Verdichter verdichtet werden, wodurch entweder die Leistungsaufnahme des Verdichters vermindert wird oder eine zusätzlich Gasmenge, welche nicht mehr als Kühlgas verwendet wird, dem Gasturbinenprozess zur Verfügung steht. Dabei kann sich das gegenüber Verdichter-Anzapfgas kühlere Gas aus dem Speichervolumen für die Kühlung und/oder den erhöhten Massenstrom als vorteilhaft erweisen. In einer Ausführungsform umfasst das Kühlgassystem Kühlgaskühler für Verdichteranzapfgas, die temporär außer Betrieb genommen werden, während das Gas aus dem Speichervolumen auf geeignete Weise, beispielsweise durch die Nutzung von Abgaswärme der Gasturbogruppe, auf die Temperatur des im Kühlgaskühler gekühlten Verdichteranzapfgases gebracht wird. Prinzipiell ist es auch möglich, die niedrige Temperatur des gespeicherten Gases für eine Senkung des erforderlichen Kühlgasmassenstroms zu nutzen, falls dies unter Berücksichtigung thermischer Spannungen in den gekühlten Bauteilen zulässig ist.

Bevorzugt wird die Wärmezufuhr zum Arbeitsmittel der Gasturbogruppe auf eine Konstanthaltung der Turbineneintrittstemperatur geregelt, vorzugsweise auf eine Vollast-Turbineneintrittstemperatur.

Gemäß einer ersten Betriebsweise der erfindungsgemässen Kraftwerksanlage wird das zusätzliche Gas genutzt, um den durch die Wärmezuführeinrichtung und die Turbine durchgesetzten Massenstrom zu erhöhen. Hieraus resultiert eine größere Leistungsabgabe der Turbine. Der Verdichter muss dabei keinen höheren Massenstrom durchsetzten, sondern lediglich ein erhöhtes Druckverhältnis liefern, weshalb dessen Leistungsaufnahme unterproportional ansteigt, woraus eine erhöhte Netto-Leistungsabgabe erfolgt.

Gemäss einer zweiten Betriebsweise wird eine verstellbare Vorleitreihe des Verdichters teilweise geschlossen, dergestalt, dass der Verdichter weniger Massenstrom fördern muss, während durch die Zufuhr des zusätzlichen Gases aus dem Speichervolumen der Massenstrom durch die Wärmezuführeinrichtung und die Turbine wenigstens konstant gehalten wird. Bei dieser Betriebsweise bleibt die Leistungsabgabe der Turbine wenigstens gleich hoch, während die Leistungsaufnahme des Verdichters sinkt. Daraus resultiert wiederum eine grössere Netto-Leistungsabgabe. Typischerweise ist es realisierbar, den Massenstrom des Verdichters um rund 20% bis 40% oder gar 50% bei nominalem Verdichterenddruck zu reduzieren und diesen Massenstrom durch Zusatzgas aus dem Speicher zu ersetzen.

In einer besonders bevorzugten Betriebsweise wird der Massenstrom durch die Wärmezuführeinrichtung konstant gehalten, mit oder ohne Zusatzgaszufuhr. Dies kann auf ganz besonders einfache Weise bewerkstelligt werden, ohne den Massenstrom explizit bestimmen zu müssen. Gemäss dem Kegelgesetz ist das Volumenstrom-Schluckvermögen der Turbine durch das Druckverhältnis bestimmt, welches sich für stationäre Kraftwerks-Gasturbinen ganz besonders einfach durch eine Messung des Verdichterenddrucks mit vernünftiger Genauigkeit bestimmen lässt. Das Massenstrom-Schluckvermögen ist zusätzlich von der Turbinen-Eintrittstemperatur abhängig. Diese wird auf dem Fachmann geläufige Weise aus dem Druckverhältnis und der Turbinenaustrittstemperatur ermittelt. Es kann damit auf folgende sehr einfache Weise auf eine Konstanthaltung des Turbinen-Massenstroms geregelt werden: Die Wärmezufuhr zum Arbeitsfluid der Gasturbogruppe, insbesondere also die Brennstoffzufuhr zu einer Brennkammer, wird derart eingeregelt, dass die Turbinentemperatur innerhalb sehr enger Grenzen um eine Solltemperatur verharrt. Gleichzeitig wird der Verdichterenddruck gemessen und bei Unterschreiten des Sollwertes die Vorleitreihe weiter geöffnet, während bei einem Überschreiten des Sollwertes die Vorleitreihe weiter geschlossen wird.

Die Leistungsregelung erfolgt bevorzugt, indem bei einer Ist-Leistung, welche kleiner ist als die Soll-Leistung, das Stellorgan zur Zufuhr von Gas aus dem Speicher zur Gasturbogruppe weiter geöffnet und umgekehrt, falls die Ist-Leistung grösser als die Soll-Leistung ist, entsprechend geschlossen wird.

In einer anderen Betriebsweise erfolgt die Leistungsregelung durch das Schliessen der Vorleitreihe, während vorzugsweise durch die Steuerung des Massenstroms vom Druckgasspeicher zur Gasturbogruppe der Verdichterenddruck konstantgehalten wird, wobei ein geringerer Massenstrom in einer Drucksenkung resultiert und ein höherer Massenstrom in einer Druckerhöhung. Eine weiter geschlossene Vorleitreihe senkt dabei die Leistungsaufnahme des Verdichters, während der nicht durch den Verdichter geförderte Massenstrom aufgrund der Druckregelung durch den Massenstrom aus dem Druckgasspeicher exakt kompensiert wird, jeweils unter der Massgabe, dass die Turbineneintrittstemperatur auf Konstanthaltung geregelt wird.

Selbstverständlich sind auch kombinierte Regelungen der Zusatzgaszufuhr aus dem Druckgasspeicher und der Vorleitreihenstellung möglich; insbesondere, wenn die jeweiligen Stellgrössen-Massenstromkennlinien bekannt sind, kann eine kombinierte Steuerung vorgenommen werden in der Art "x % Öffnen des Zusatzgas-Stellorgans wird durch y % Schliessen der Vorleitreihe massenstromkompensiert, was zusammen in z % Leistungssteigerung resultiert". Auf diese Weise kann bei einer gewünschten Leistungssteigerung recht schnell die Vorleitreihenstellung und die Stellung des Stellorgans für die Zusatzgaszufuhr vorgesteuert werden und es müssen nur noch geringe Abweichungen im geschlossenen Regelkreis ausgeregelt werden, was selbstverständlich eine schnellere Einstellung von Leistungswerten ermöglicht; gegebenenfalls kann auch die Wärmezufuhr zum Arbeitsfluid durch eine Störgrössenaufschaltung vorgesteuert werden, was allerdings mit Vorteil eine Messung der Temperatur des Zusatzgases und des vom Verdichter gelieferten Gases bedingt. Auf dieser Basis lässt sich dann sehr leicht eine Energiebilanz berechnen, um eine konstante Turbineneintrittstemperatur ebenfalls vorzusteuern und nur noch kleine Abweichungen vom Sollwert ausregeln zu müssen.

In einer anderen, oben bereits angerissenen Betriebsweise bleibt die Vorleitreihe geöffnet, und durch die Zusatzgaszufuhr wird der Massenstrom durch die Turbine erhöht, was in einer erhöhten Netto-Leistungsabgabe resultiert. Die Turbineneintrittstemperatur wird wiederum mit Vorteil konstant gehalten. Die Zufuhr des Zusatzmassenstroms aus dem Speicher kann wiederum vollständig geregelt erfolgen mit der Netto-Leistungsabgabe als Leitgrösse und der Stellung des Zusatzluft-Stellorgans als Stellgrösse. Alternativ wird die Stellung des Zusatzgas-Stellorgans vorgesteuert und es bleibt nur noch eine geringe Abweichung auszuregeln, was die Reaktion auf Leistungsanforderungen beschleunigt. Ebenso kann auch die Wärmezufuhr, insbesondere Brennstoffzufuhr, vorgesteuert werden, was allerdings mit Vorteil eine Messung der Gastemperaturen bedeutet, damit jeweils die Energiebilanz zur Konstanthaltung der Turbineneintrittstemperatur sauber vorberechnet werden kann. Eine Regelung im geschlossenen Regelkreis zur Feinjustage der Betriebsbedingungen ist stets vorteilhaft. Diese Betriebsweise, bei der der Turbinen-Massenstrom angehoben wird, ist gerade dann zu bevorzugen, wenn im Abgasweg der Gasturbogruppe Einrichtungen zur Abwärmenutzung, beispielsweise ein Abhitzedampferzeuger oder ein Wärmetauscher einer nachgeordneten Heissluftturbine oder Heissgasturbine, angeordnet sind, weil deren Leistungsabgabepotenzial infolge des erhöhten Abgasmassenstroms ebenfalls steigt.

Beide Massnahmen - Erhöhung des Turbinen-Massenstroms und Verringerung des Verdichter-Massenstroms - können auch kombiniert werden. Die grösste Leistungssteigerung lässt sich selbstverständlich erreichen, wenn sowohl der Turbinen-Massenstrom erhöht als auch der Verdichter-Massenstrom vermindert wird; hierbei muss allerdings genauestens auf einen hinreichenden Abstand von der Abreissgrenze des Verdichters geachtet werden, wie unten ausgeführt.

Bevorzugt findet das erfindungsgemässe Verfahren dann Anwendung, wenn die Leistung der Gasturbogruppe über die Volllastleistung angehoben werden soll, wobei die Volllastleistung definiert ist als die Leistung, welche die Gasturbogruppe bei den aktuellen Umgebungsbedingungen bei vollständig geöffneter Vorleitreihe und maximaler dauerhaft zulässiger Turbineneintrittstemperatur zu leisten vermag, wobei außerdem Maßnahmen wie eine Ansaugluftkühlung oder sogenannte "Wet Compression" bereits ausgeschöpft sein können. Mit Vorteil wird die Turbineneintrittstemperatur während des gesamten derartigen Betriebes auf dem Maximalwert konstant eingeregelt, was auch zu einer bestmöglichen Ausnutzung des gespeicherten Gases beiträgt. Ein solcher Betrieb ist hervorragend geeignet, um Spitzenlastanforderungen zu decken, insbesondere in Zeiten, in denen sich Strom teuer ins Netz verkaufen lässt. Umgekehrt wird ein Zeiten geringer Stromnachfrage billig einzukaufende elektrische Leistung oder Leistung, die zwar erzeugbar ist, für die aber aktuell auf dem Markt keine Nachfrage zu adäquaten Preisen vorhanden ist, genutzt, um einen Kompressor anzutreiben und den Druckgasspeicher zu füllen.

Eine weitere Möglichkeit, die die Erfindung bietet, ist die, die Gasturbogruppe mittels des im Druckgasspeicher gespeicherten Gases anzufahren. Hierzu wird die Turbine mit Druckgas beaufschlagt und der Wellenstrang mit Hilfe des Druckgases beschleunigt, bis die Gasturbogruppe in der Lage ist, sich selbst am Leben zu erhalten. Dies ermöglicht den sogenannten Schwarzstart einer Kraftwerksanlage in einem ganz und gar stromlosen Netz. im Extremfall kann auf eine herkömmliche Startvorrichtung, wie beispielsweise ein statischer Frequenzwandler, welcher einen Generator als Anfahrmotor betreibt, vollständig verzichtet werden.

Es ist jeweils wichtig, die Abreissgrenze des Verdichters der Gasturbogruppe im Auge zu behalten. Im Betrieb mit Massenstromerhöhung steigt der Verdichterenddruck, und dieser muss so begrenzt werden, dass ein Sicherheitsabstand des Verdichters von der Abreissgrenze erhalten bleibt. Beim Schliessen der Vorleitreihe, mit entsprechender Massenstromreduktion, verschiebt sich die Abreissgrenze zu tieferen Drücken, was ebenfalls zu berücksichtigen ist, derart, dass die Massenstromreduktion im Verdichter durch einen Sicherheitsabstand des aktuellen Verdichterenddruckes von der Abreissgrenze begrenzt ist.

Eine weitere Grenze des möglichen Massenstroms stellt die maximale Feuerungsleistung der Brennkammer dar. Die Schluckgrenze der Turbine wird hingegen in Anbetracht der genannten Limitierungen kaum erreicht werden.

Weitere wichtige Merkmale und Vorteile der vorliegenden Erfindung ergeben sich aus den Unteransprüchen, aus den Zeichnungen und aus der zugehörigen Figurenbeschreibung anhand der Zeichnungen.

### Kurze Beschreibung der Zeichnungen

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen. Es zeigen, jeweils schematisch,

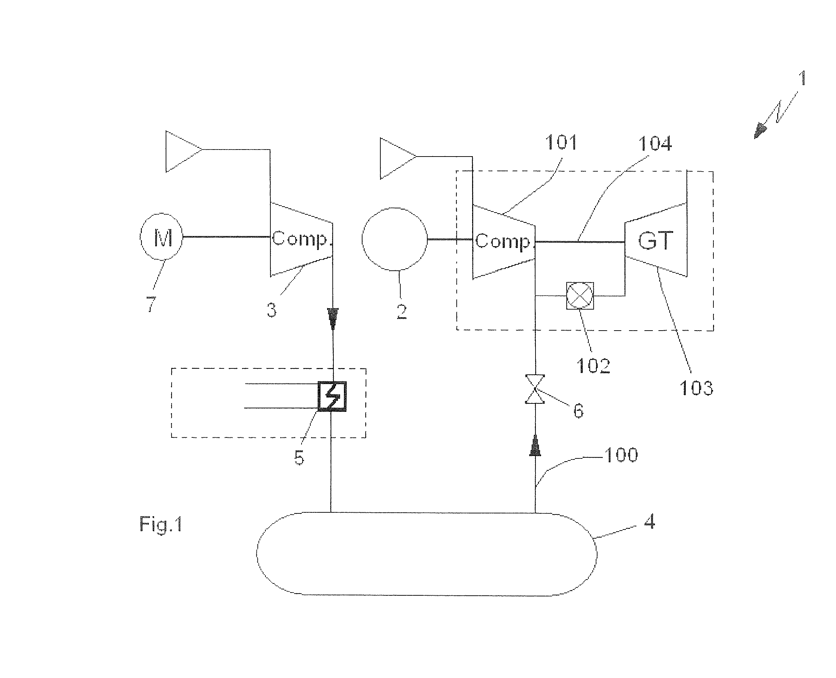

- Fig. 1 bis 12: jeweils eine stark vereinfachte, schaltplanartige Prinzipdarstellung einer erfindungsgemäßen Kraftwerksanlage bei unterschiedlichen Ausführungsformen.

Für das Verständnis der Erfindung nicht unmittelbar notwendige Elemente sind weggelassen. Die Ausführungsbeispiele sind rein instruktiv zu verstehen, und sollen nicht zu einer Einschränkung der in den Ansprüchen gekennzeichneten Erfindung herangezogen werden.

### Weg zur Ausführung der Erfindung

Die Figur 1 zeigt eine erste Ausführungsform der Erfindung. Die dargestellte Kraftwerksanlage basiert auf einer konventionellen Gasturbogruppe 1, umfassend einen Verdichter 101, eine Brennkammer 102 und eine Turbine 103 zum Antrieb eines Generators 2. Weiterhin ist ein Verdichter 3 angeordnet, welcher von einem Elektromotor 7 antreibbar ist. Verdichter 101 und Gasturbine 103 sowie Generator 2 sind zweckmäßig durch eine gemeinsame Welle verbunden bzw. auf einen gemeinsamen Wellenstrang 104 angeordnet. Der Verdichter 3 wird bevorzugt in Zeiten geringer Elektrizitätsnachfrage und damit geringer Strompreise betrieben und fördert dann ein Speichergas, vorzugsweise Luft, in ein Speichervolumen 4. Dabei kann mit Vorteil ein Kühler 5 zwischengeschaltet sein, damit die Temperatur im Speichervolumen 4 nicht zu stark infolge der Kompression ansteigt. Das Druckverhältnis des Kompressors 3 ist grösser als das der Gasturbogruppe 1, wenn der Druck im Speichervolumen 4 grösser als der maximale Verdichterenddruck der Gasturbogruppe sein muss.

Energetisch ist es auch sinnvoll, den Verdichter 3 mit einer oder mehreren hier nicht dargestellten Zwischenkühlungsstufen auszustatten, damit die Wärme jeweils bei möglichst niedriger Temperatur abgeführt wird. Zwischen dem Kompressor 3 und dem Speichervolumen 4 ist selbstverständlich auch ein nicht dargestelltes Rückschlagorgan notwendig. Wenn der Strompreis und/oder die Stromnachfrage einen bestimmten unteren Schwellenwert überschreitet oder wenn der Druck im Speicher 4 einen oberen Grenzwert überschreitet, wird der Kompressor 3 ausser Betrieb genommen. Im Speicher 4 ist jetzt "billige" Energie in Form gespannter Luft gespeichert. Wenn der gezahlte Strompreis und/oder die Nachfrage einen bestimmten oberen Grenzwert überschreitet, wird ein Absperr- und Drosselorgan 6 geöffnet, und Druckgas bzw. Druckluft aus dem Speicher 4 wird über eine Verbindungsleitung 100, in der das Absperr- und Drosselorgan 6 angeordnet ist, stromab des Verdichters 101 in den Strömungsweg der Gasturbogruppe 1 eingeleitet. Dieser Zusatz-Gasmassenstrom wird in der Brennkammer 102 erhitzt und in der Turbine 103 arbeitsleistend entspannt, ohne im Verdichter 101 verdichtet werden zu müssen, was zu einer Steigerung der Netto-Leistungsabgabe führt.

Zusätzlich kann dabei eine verstellbare Vorleitreihe des Verdichters 101 teilweise geschlossen werden, wodurch sich der Verdichtermassenstrom und damit dessen Leistungsaufnahme vermindert. In einer Betriebsweise, welche in offenen Gasturbinen ohne Abgaswärmenutzung zu bevorzugen ist, wird z.B. der Verdichtermassenstrom verringert und der Turbinenmassenstrom konstant gehalten, um die Abgaswärmeverluste in Grenzen zu halten. Erst bei höchsten Leistungssteigerungsraten wird dann der Turbinenmassenstrom gesamthaft erhöht. Somit kann in Zeiten hoher Nachfrage und hoher Strompreise die Netto-Leistungsabgabe der Gasturbogruppe signifikant erhöht werden.

Gegenüber einer Wasser- oder Dampfeinspritzung wird kein Wasser verbraucht, was eine Verwendung der Kraftwerksanlage an einem Ort mit Wassermangel ermöglicht.

Im Gegensatz zu einer Gas- bzw. Luftspeicherturbine einer Standard-Gasspeicherkraftanlage kann eine Standard-Gasturbine zur Entspannung des Speichergases verwendet werden, im dargestellten Beispiel der gesamte Wellenstrang 104 einschließlich Generator 2. Allenfalls muss ein Generator mit einer grösseren Grenzleistung verwendet werden. Ebenfalls kann der Verdichter 101 auf relativ einfache Weise und mit geringem Aufwand auf einen etwas kleineren Nenn-Massenstrom skaliert werden, wodurch die Nennleistung der Gasturbogruppe 1 sinkt, oder die Turbine 103 kann für eine höhere Schluckfähigkeit hochskaliert werden, was aber, im Gegensatz zur Verdichtermodifikation möglicherweise Gehäusemodifikationen erfordert. In jedem Fall wächst das Leistungssteigerungspotenzial, und die Gasturbogruppe wird besser für einen erfindungsgemässen Spitzenlastbetrieb geeignet. Ebenso kann das Speichervolumen wesentlich kleiner ausfallen als bei einer reinen Gas- bzw. Luftspeicherturbine. Der Verdichter 3 kann ebenfalls standardmässig eingekauft werden und kann vom Betriebsverdichter 101 der Gasturbogruppe deutlich unterschiedliche Spezifikationen aufweisen; er wird insbesondere für kleinere Volumenströme und höhere Druckverhältnisse gewählt. Selbst bei einem kompletten Ausfall der Speichervorrichtung, samt Kompressor 3 und Speichervolumen 4, kann die Kraftwerksanlage noch vollwertig betrieben werden und verliert nur die Fähigkeit zur Spitzenlasterzeugung, kann aber im Nominalbetrieb vollwertig weiterarbeiten.

Die erfindungsgemässe Kraftwerksanlage bietet also überragende Flexibilität und Betriebs- und Investitionssicherheit für den Betreiber.

Häufig ist der Generator 2 auch mit einer Vorrichtung verbunden, über welche der Generator 2 zum Anfahren der Gasturbogruppe als Motor betreibbar ist, oder es ist eine andere Start-Hilfsvorrichtung zum Anfahren der Gasturbogruppe 1 vorhanden. Im Extremfall kann bei der vorliegenden Erfindung auf eine derartige Startvorrichtung verzichtet werden. Bei aufgeladenem oder teilaufgeladenem Druckgasspeicher 4 kann die Gasturbogruppe 1 angefahren werden, indem die Turbine 103 mit Druckgas aus dem Speicher 4 beaufschlagt wird. Gegenüber herkömmlichen Starthilfseinrichtungen, welche im Allgemeinen auf Hilfsenergie von aussen angewiesen sind, kann die Gasturbogruppe 1 mit Hilfe des Druckgases auch stromlos oder höchstens mit einer klein zu dimensionierenden Notstromversorgung, beispielsweise in Form von Akkus, angefahren werden.

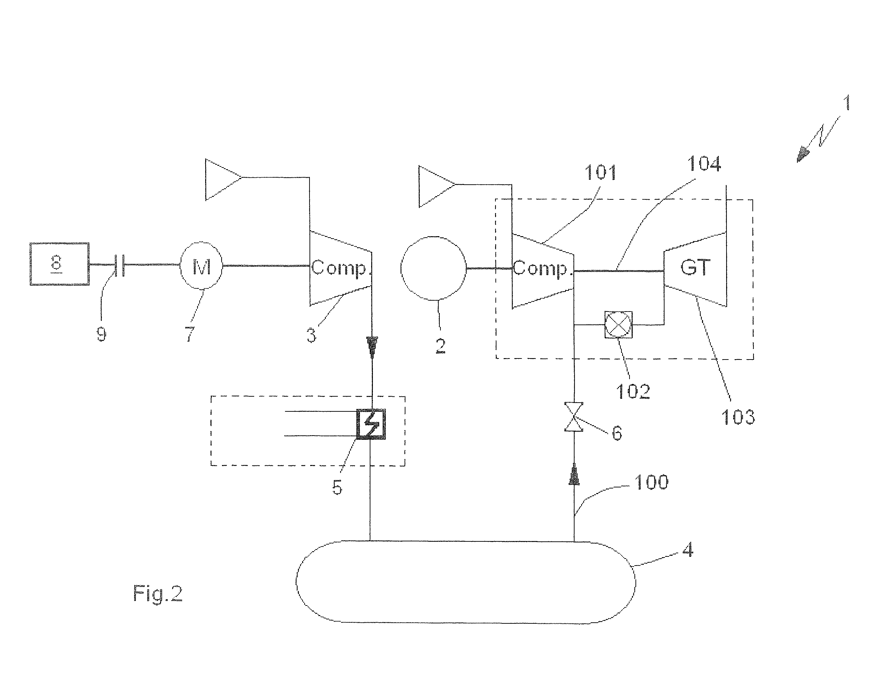

Die Ausführungsform gemäss Figur 2 ermöglicht hier weitergehende Flexibilität. Der Verdichter 3 ist einerseits mit dem elektrischen Antriebsmotor 7 verbunden, andererseits ist eine externe Kraftmaschine, beispielsweise ein Dieselmotor 8, über eine Kupplung 9 auf den Wellenstrang des Verdichters 3 aufschaltbar. Die Leistung des Motors 8 kann vergleichsweise klein bemessen werden. Damit kann die Aufladung des Druckluftspeichers 4 vollkommen autark erfolgen. Ein Schwarzstart ist jetzt sogar bei leerem Speicher 4 möglich; es muss lediglich der Motor 8 gestartet werden, welcher sukzessive den Kompressor 3 antreibt und den Speicher 4 füllt, bis der Druck zum Starten reicht.

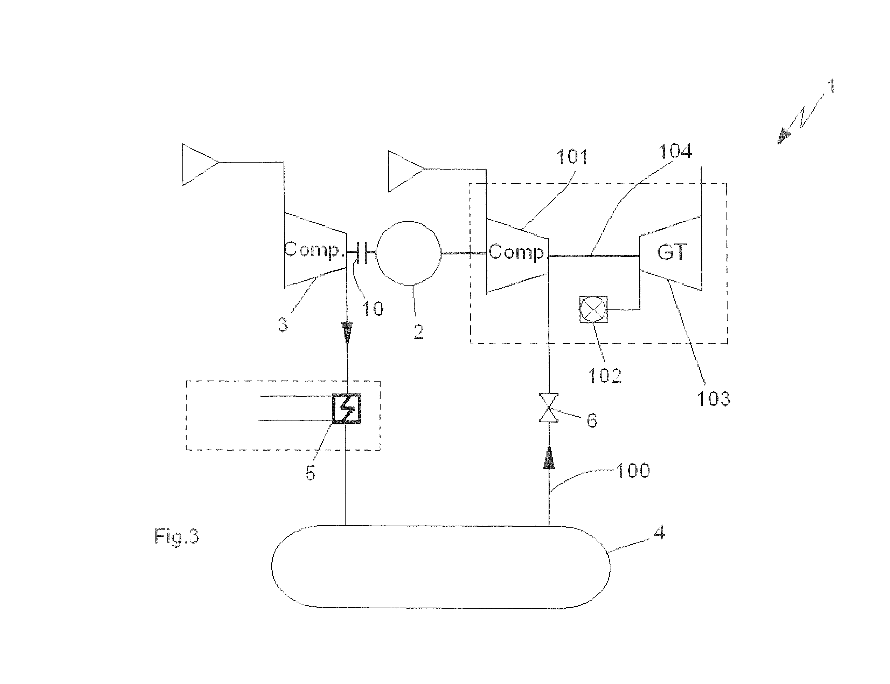

Gemäss Figur 3 ist der Ladekompressor 3 auf einem Wellenstrang mit der Gasturbogruppe 1 und dem Generator 2 angeordnet und mittels einer Kupplung 10 an diese ankoppelbar. Selbstverständlich könnte auch ein nicht dargestelltes Übersetzungsgetriebe vorhanden sein, damit die Drehzahl des Kompressors 3 über der Netzsynchronen Drehzahl des Generators 2 liegt. Bei Strompreisen unterhalb des unteren Schwellenwertes wird die Kupplung 10 geschlossen; der Generator 2 liefert dann weniger Strom ins Netz als die Nettoleistungsabgabe der Gasturbogruppe 1. Die Gasturbogruppe 1 treibt dann den Generator 2 und den Ladekompressor 3 an. Der Speicher 4 wird aufgeladen. Bei einer derartigen Betriebsweise kann die überschüssige Leistung der Gasturbogruppe 1 unmittelbar zum Antreiben des Ladekompressors 3 verwendet werden, was zu einem extremen Vorteil der erfindungsgemäßen Kraftwerksanlage gegenüber einer herkömmlichen Kraftwerksanlage und einer herkömmlichen Gasspeicherkraftanlage führt. Denn bei einem reduzierten Strombedarf produziert die herkömmliche Kraftwerksanlage entweder überschüssige elektrische Leistung oder wird mit einem verschlechterten Wirkungsgrad betrieben. Des Weiteren wird eine herkömmliche Gasspeicherkraftanlage üblicherweise mittels überschüssiger elektrischer Leistung aufgeladen. Demnach treten bei der Kraftwerksanlage Umwandlungsverluste mechanisch-elektrisch auf, während bei der Gasspeicherkraftanlage Umwandlungsverluste elektrisch-mechanisch auftreten. Im Unterschied dazu kann bei der erfindungsgemäßen Kraftwerksanlage die überschüssige Leistung der Gasturbogruppe 1 unmittelbar mechanisch zum Antreiben des Kompressors 3 der Gasspeicherkraftanlage genutzt werden. Die zuvor genannten Umwandlungsverluste treten hier nicht auf, so dass insgesamt ein erheblich verbesserter Wirkungsgrad erzielt werden kann.

Bei Strompreisen oberhalb des unteren Schwellenwertes wird die Kupplung 10 geöffnet und die Gasturbogruppe 1 läuft im Normalbetrieb. Bei Überschreiten eines oberen Grenzwertes für den Preis wird der beschriebene Spitzenlastbetrieb mit Zusatzluft aus dem Speicher 4 realisiert.

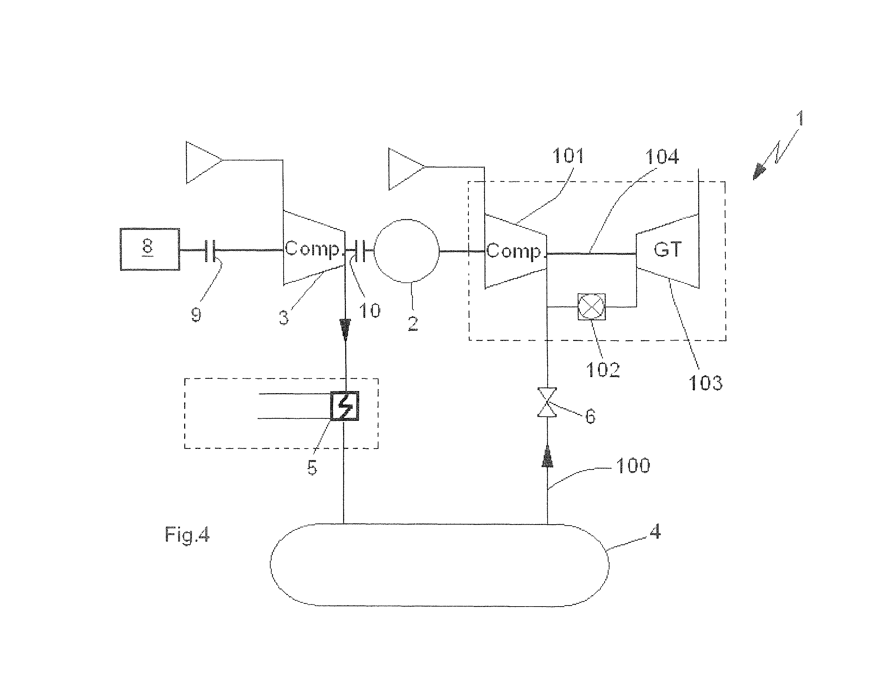

Gemäss Figur 4 ist der Kompressor alternativ wieder über einen externen Motor 8 antreibbar.

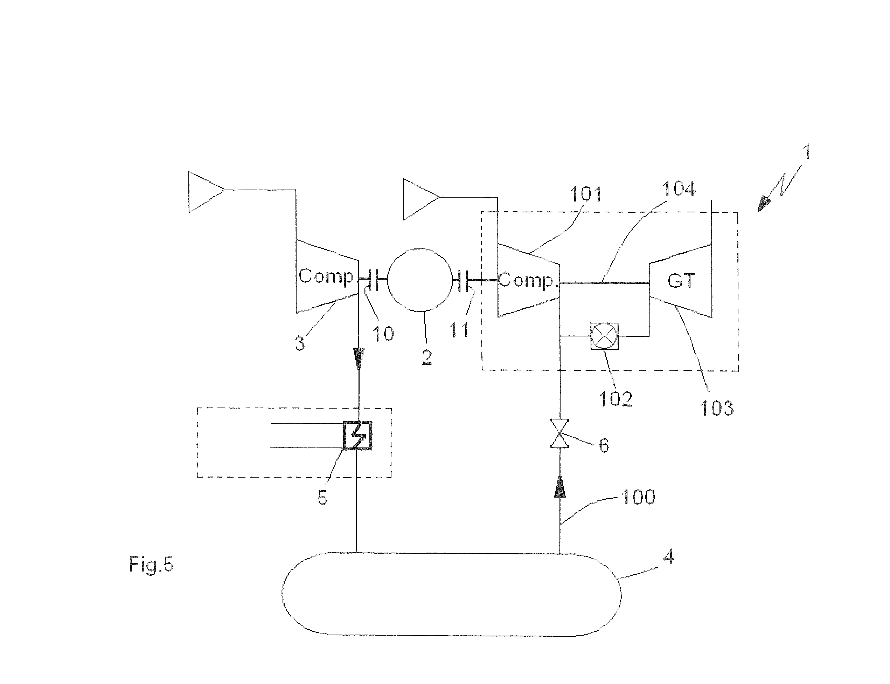

Gemäss Figur 5 kann der Generator 2 sowohl generatorisch als auch elektromotorisch betrieben werden. Die Gasturbogruppe 1 kann über eine Kupplung 11 komplett vom Generator 2 getrennt werden. Wenn der Generator 2 elektromotorisch betrieben wird, ist die Kupplung 11 geöffnet und die Kupplung 10 stellt einen Kraftschluss her. Der Kompressor 3 kann somit auch dann betrieben werden, wenn die Gasturbogruppe 1 stillsteht. Daneben ist selbstverständlich auch der in Verbindung mit Figur 3 erläuterte Ladebetrieb möglich. Die Betriebsflexibilität ist erhöht, allerdings ist der Wellenstrang bis zum Generator 2 kein Standard mehr. Die Gasturbogruppe 1 ist weiterhin Standard, was eine grosse Investitionssicherheit bietet. Auch hier, wie in allen nachfolgend dargestellten Figuren kann prinzipiell ein externer Motor, insbesondere ein Verbrennungsmotor, zum Antrieb des Kompressors 3 auf die oben beschriebene Art angeordnet sein.

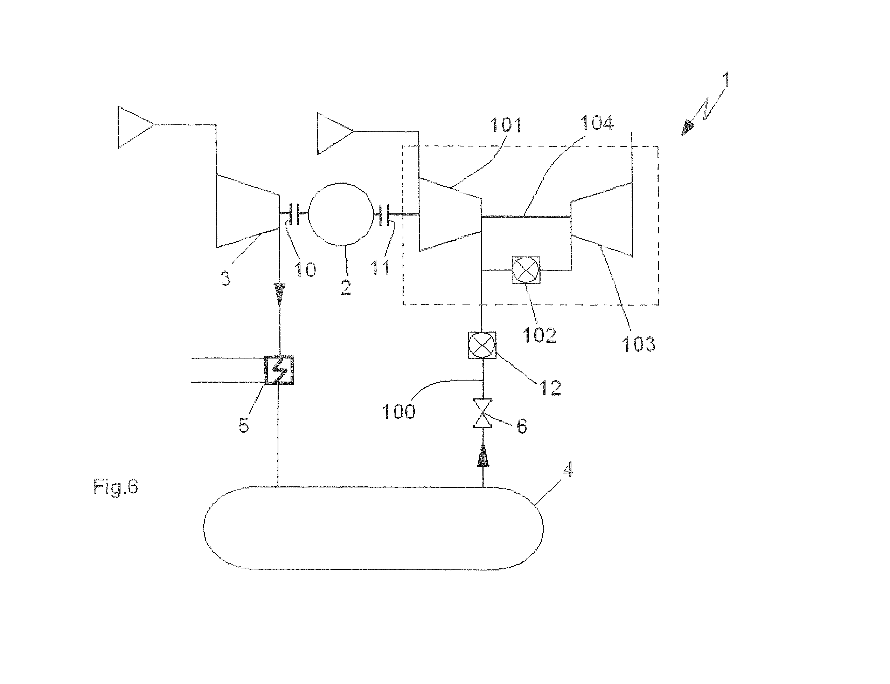

Bei der Anordnung gemäss Figur 6 ist in der Verbindungsleitung 100, also im Strömungsweg des Gases vom Speicher 4 zur Gasturbogruppe 1 eine Feuerungseinrichtung 12 angeordnet. Es ist thermodynamisch zur Verringerung der Mischungsverluste durchaus von Vorteil, das Zusatzgas vorgängig der Mischung auf die Temperatur des Verdichterendgases des Betriebsverdichters 101 zu bringen.

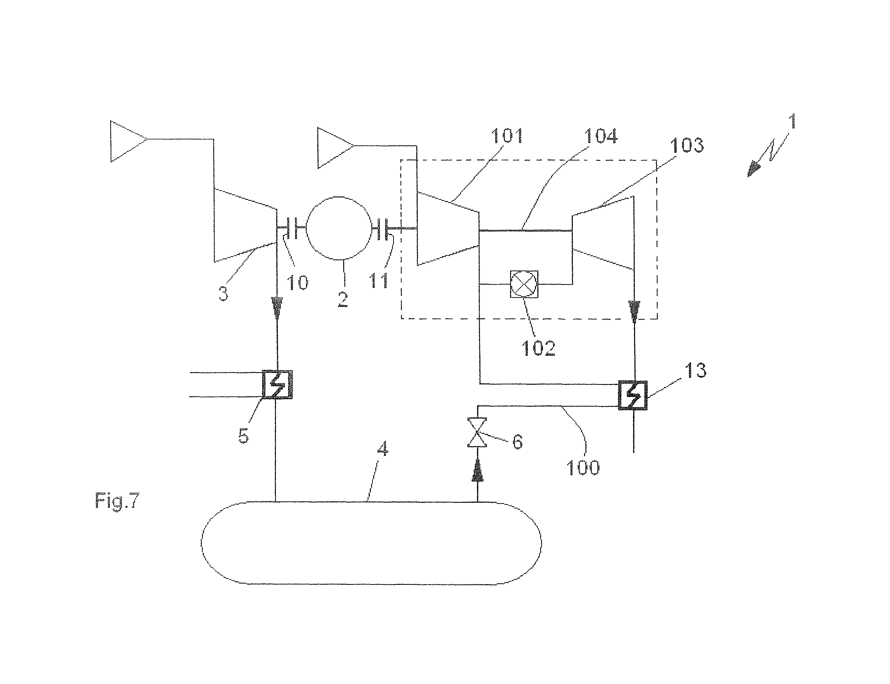

In Figur 7 ist die Zusatzfeuerung durch einen Abgaswärmetauscher 13 ersetzt. Da der Abgasmassenstrom grösser ist als der Zusatzgasmassenstrom, ist es an sich möglich, ohne Taupunktsunterschreitung im Abgas das Zusatzgas bis nahe an die Temperatur der Abgase der Gasturbine zu bringen. Bei angenommenen 450 °C Verdichterendtemperatur und 550°C Turbinenaustrittstemperatur kann das Zusatzgas leicht bis auf die Verdichterendtemperatur aufgewärmt werden.

Erwähnenswert ist hierbei noch die Möglichkeit der Blindleistungsregelung in sehr weiten Grenzen bei den Ausführungsformen, welche den Generator auch motorisch zu betreiben vermögen.

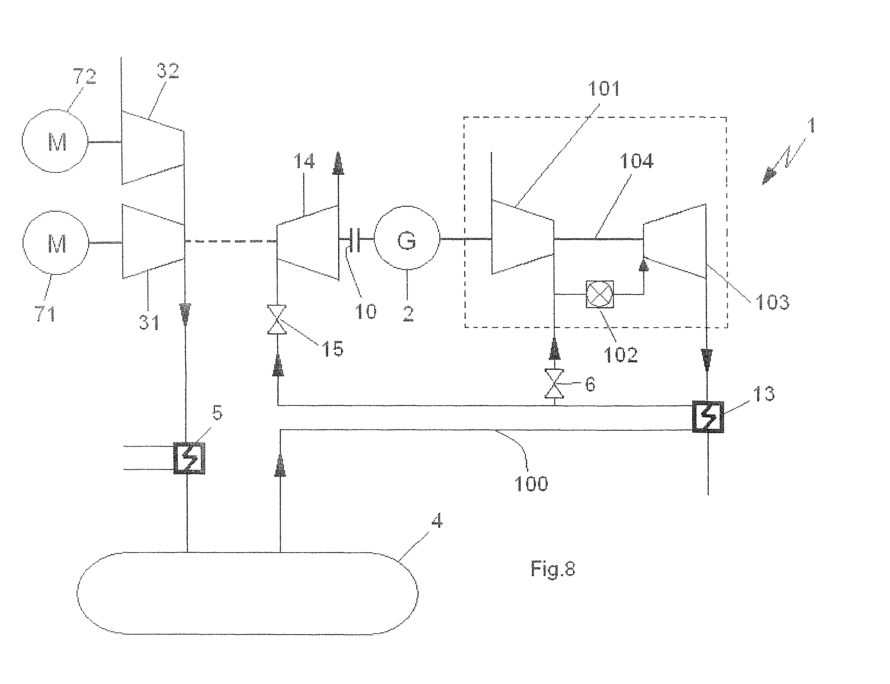

Die bisher dargestellten Ausführungsformen zeichnen sich durch besonders niedrige Investitionskosten aus. Nachteilig ist, dass die Abgaswärme nur unvollständig genutzt wird. Ein bevorzugter Spitzenlastbetrieb ist derjenige mit teilgeschlossener Vorleitreihe und gegenüber Nennbedingungen unverändertem Turbinen-Massenstrom; Bei Massenstromerhöhung steigen die Abgasverluste verhältnismässig stark an. Die Ausführungsformen gemäss den folgenden Figuren 8 bis 12 weisen Einrichtungen zur Nutzung der Abgaswärme auf, und können deshalb mit Vorteil auch mit maximalem Turbinenmassenstrom, gemäss den oben definierten Kriterien, nämlich die Grenzen der Feuerungsleistung der Brennkammer, gegebenenfalls bei gleichzeitiger Einhaltung von Emissionslimiten, sowie die Abreissgrenze des Betriebsverdichters, wirtschaftlich betrieben werden.

Die Ausführungsform gemäss Figur 8 umfasst neben einer Gasturbogruppe 1 eine Gasspeicherkraftanlage, umfassend zwei Ladeverdichter 31, 32, welche durch Motoren 71, 72 angetrieben werden können, und so in oben beschriebener Weise ein Speichervolumen 4 mit Druckluft aufladen aufladen, sowie eine Gasspeicherturbine oder Luftturbine 14, welche mit der Gasturbogruppe 1 auf einem gemeinsamen Wellenstrang 104 angeordnet ist und auf einen gemeinsamen Generator 2 wirkt. Die Gasspeicherturbine 14 ist durch eine Kupplung 10 vom Wellenstrang 104 abkoppelbar, um ein Ventilieren in nichtbeaufschlagtem Zustand zu vermeiden; es handelt sich mit Vorteil um eine selbsttätige Kupplung, welche die Verbindung löst, sobald die Drehzahl der Gasspeicher- oder Luftturbine 14 die des restlichen Wellenstranges 104 unterschreitet, und umgekehrt eine Verbindung herstellt, sobald die Luftturbine 14 bei Drehzahl des Wellenstranges 104 eine Leistung aufzubringen vermag. Derartige Kupplungen 10 gehören bei einwelligen Kombianlagen (Gasturbine mit Dampfturbine) zum Stand der Technik und sind dem Fachmann daher ohne Weiteres geläufig.

Bei erhöhten Leistungsanforderungen kann ein erster Teil des gespeicherten Gases über das Stellorgan 6 der Gasturbogruppe 1 stromab des Verdichters 101 zugeführt werden, während ein weiterer Teil über das Absperr- und Stellorgan 15 in die Gasspeicher- und Luftturbine 14 geleitet werden kann. Der Gesamtmassenstrom strömt über einen Abgaswärmetauscher 13. Der Gesamtmassenstrom des Gases bzw. der Luft aus dem Speicher 4 kann dabei durch den Massenstrom der Gasspeicherturbine 14 derart eingeregelt werden, dass das gesamte Abwärmepotenzial genutzt wird. Der Massenstrom der Turbine 103 kann bis zum oben diskutierten Maximum gesteigert werden, da das Abwärmepotenzial nutzbar ist; eine Erhöhung des Abgasmassenstromes führt auch zu einer Erhöhung des in der Gasspeicherturbine 14 abbaubaren Wärmepotenzials und damit zu einer weiteren Steigerung der gesamten Netto-Leistungsabgabe.

Eine derartige Gasspeicherkraftanlage wird üblicherweise auch als ",Compressed-Air-Energy-Storage-System", kurz CAES-System bezeichnet. Die Grundidee eines herkömmlichen CAES-Systems ist, überschüssige Energie, die von permanent betriebenen herkömmlichen Kraftwerken, wie z.B. Kohlekraftwerken oder Kernkraftwerken, während der Schwachlastzeiten mit niedrigem Strompreis erzeugt wird, zu speichern. Erreicht wird dies dadurch, dass mit Hilfe der preiswerten überschüssigen Energie Luft oder ein anderes Gas unter einem relativ hohen Druck in einen Speicher gepumpt wird. Aus diesem wird die Luft bzw. das entsprechende Speichergas bei Bedarf zur Erzeugung von Strom bei Spitzenlasten, also bei hohem Strompreis wieder entnommen. Das bedeutet, dass die Energie in Form von potentieller Energie abrufbar bevorratet wird. Als Speicher dienen beispielsweise ausgediente Kohle- oder Salzbergwerke oder entsprechend dimensionierte Rohrspeichersysteme. Da das im Gasspeicher bevorratete Gas üblicherweise Luft ist, wird eine derartige Gasspeicherkraftanlage im Allgemeinen auch als Luftspeicherkraftanlage bezeichnet.

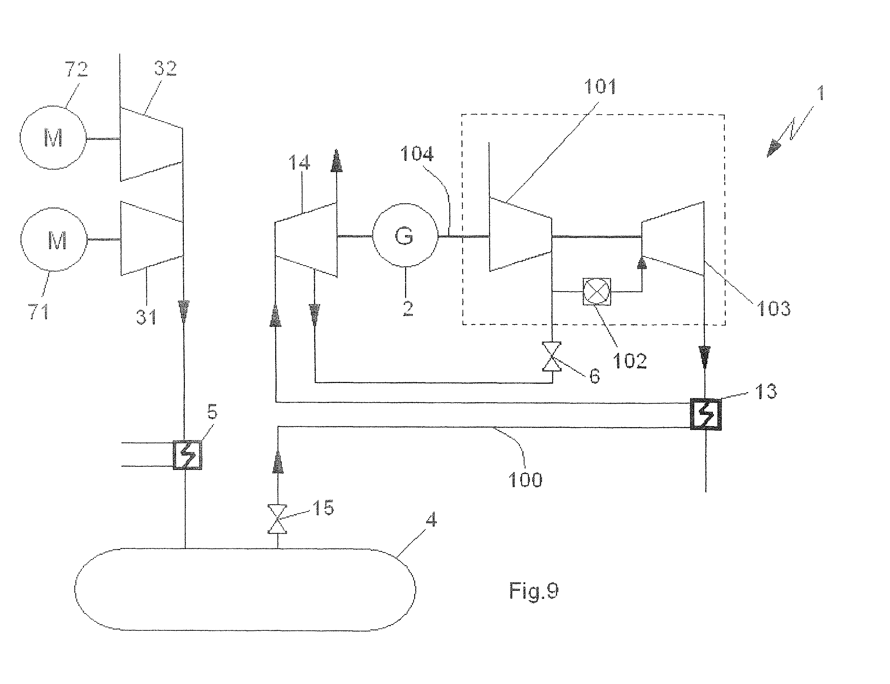

Figur 9 ist eine Variation und Optimierung der Schaltung aus Figur 8. Der gesamte aus dem Speicher 4 entnommene Gasmassenstrom durchströmt zunächst den Abgaswärmetauscher 13 und wird über die Gasspeicherturbine 14 zumindest teilweise abgearbeitet, bevor ein von dem Absperr- und Stellorgan 6 bemessener teilentspannter Teilstrom entnommen und der Gasturbogruppe zugeleitet wird.

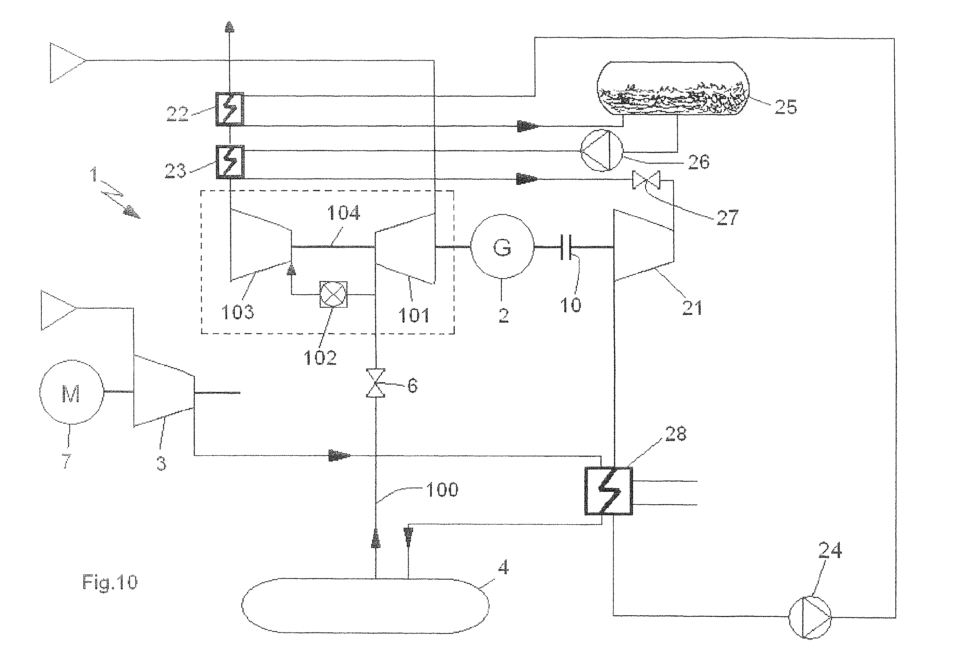

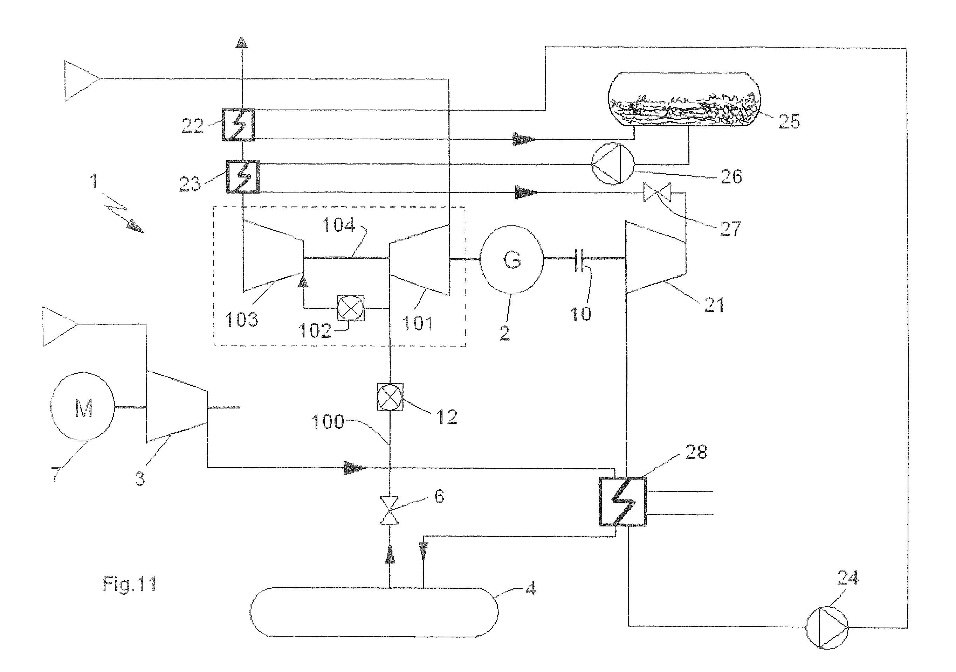

Figuren 10 und 11 zeigen die Realisierung einer erfindungsgemässen Kraftwerksanlage als Kombianlage mit einem der Gasturbogruppe 1 nachgeordneten Wasser-Dampf-Kreislauf zur Abwärmenutzung. Der Aufbau der Gasturbogruppe 1 mit Gasspeicher 4 entspricht an sich den oben dargestellten Ausführungsformen. Mit der Gasturbine 101 auf einem gemeinsamen Wellenstrang angeordnet und über eine selbsttätige Kupplung 10 mit diesem verbindbar ist eine Dampfturbine 21 angeordnet. Der Wasser-Dampf-Kreislauf ist beispielhaft stark vereinfacht dargestellt und ist dem Fachmann an sich geläufig, weshalb nachfolgend nur eine sehr globale Darstellung erfolgt. Im Abgasstrom der Gasturbogruppe 1 sind ein Vorwärmer 22 und ein Verdampfer/Überhitzer 23 angeordnet. Eine Kondensatpumpe 24 pumpt bzw. fördert Wasser mit einem Druck von beispielsweise 2 bis 5 bar zum Vorwärmer 22, wo das Kondensat bis in die Nähe des Siedepunktes aufgeheizt wird. Dieses Kondensat wird in einen Speisewasserbehälter und Entgaser 25 gefördert. Eine Kesselspeisepumpe 26 bringt dieses Wasser auf Frischdampfdruck und fördert das Speisewasser durch den als sogenannter OTSG "Once Through Steam Generator" ausgeführten Dampferzeuger/Überhitzer 23. Ein Frischdampfregelventil 27 steuert die Frischdampfzufuhr zur Dampfturbine 21. In der Dampfturbine 21 wird der Dampf entspannt und anschliessend im Kühler 28 wieder kondensiert. Der Kühler für das vom Kompressor 3 geförderte Gas ist in einen Kühlmittelkreislauf mit dem Kühler/Kondensator 28 integriert. D.h. zur Kühlung des dem Speicher 4 zugeführten Gases und des von der Dampfturbine 21 abgeführten Dampfes ist ein gemeinsamer Kühler 28 vorgesehen.

Die Ausführungsform gemäss Figur 11 zeichnet sich gegenüber der Ausführungsform gemäss Figur 10 durch die Feuerung 12 für das Zusatzgas aus. Anstelle der Zusatzgasfeuerung oder ergänzend hierzu, z.B. als Vorwärmer, kann selbstverständlich auch eine Einrichtung zur Nutzung von Abgaswärme angeordnet sein. Die Vorwärmung des Zusatzgases wird mit Vorteil, wie auch in den anderen dargestellten Beispielen mit Zusatzgasvorwärmung, so geregelt, dass die Temperatur des Zusatzgases der Temperatur des Verdichterendgases entspricht. Bei der Anwendung der Erfindung in einem Kombikraftwerk kann ein Betrieb mit erhöhtem Turbinenmassenstrom besonders effizient eingesetzt werden, weil ein erhöhter Turbinen- und damit Abgasmassenstrom für eine erhöhte Dampfproduktion und damit für eine zusätzliche Leistungserhöhung der Dampfturbine 21 nutzbar ist.

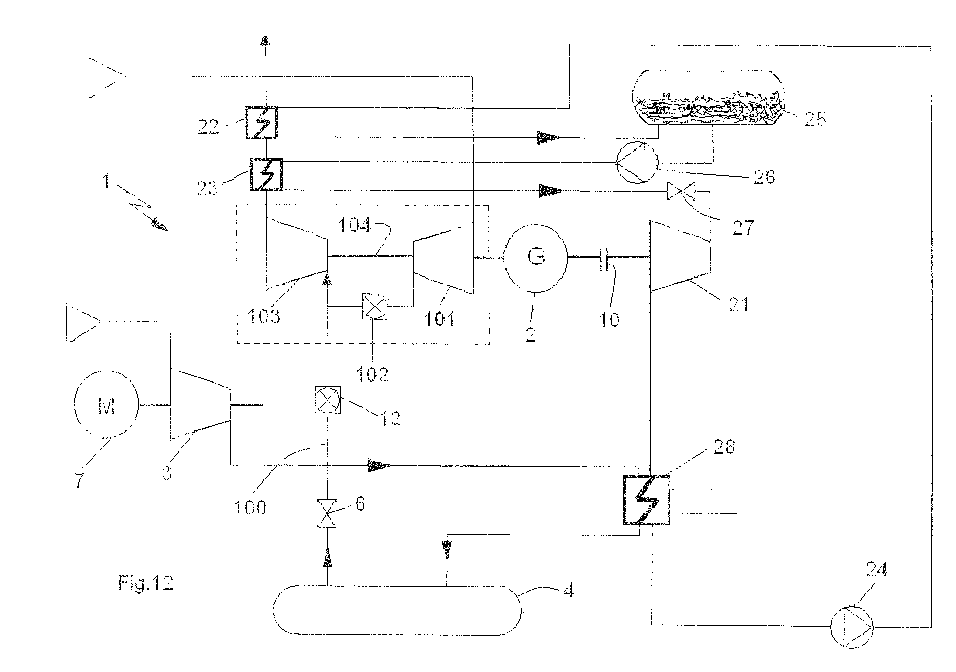

In einer weiteren Ausführungsform der Erfindung kann gemäß Figur 12 das Zusatzgas stromab der Brennkammer 102 der Gasturbogruppe 1 eingebracht werden. Es ist dann notwendig, im Strömungsweg des Zusatzgases eine Feuerung anzuordnen, welche das Zusatzgas unmittelbar auf die Turbineneintrittstemperatur zu erhitzen vermag. Eine solche Bauweise ist zwar aufwändiger zu realisieren, kann aber von grösstem Vorteil sein, wenn der Betrieb mit erhöhtem Turbinenmassenstrom angestrebt wird. Es muss dann keine Rücksicht auf die begrenzte Feuerungsleistung der Brennkammer 102 der Gasturbogruppe 1 genommen werden, welche ja vorteilhaft zu einer Standardmaschine gehört und insbesondere bei gleichzeitiger Einhaltung von Emissionslimiten nur eine begrenzte Feuerungsleistung umzusetzen vermag.

Bei der vorliegenden Erfindung wird somit auf unterschiedliche Weise eine Gasspeicherkraftanlage mit einer Gasturbogruppe 1 kombiniert. Bei allen Ausführungsformen kann das Druckgas, insbesondere die Druckluft, aus dem Druckgasspeicher 4 zur Erhöhung der Nennleistung der Gasturbine 103 und/oder zum Starten der Gasturbine 103 genutzt werden. Bei einfachen Ausführungsformen kann dabei auf eine Gasspeicherturbine oder Luftturbine 14 verzichtet werden. Eine weitere Besonderheit wird auch darin gesehen, dass der Kompressor 3, der zur Aufladung des Druckgasspeichers 4 dient, mit dem Wellenstrang 104 der Gasturbogruppe 1 gekoppelt werden kann. Auf diese Weise kann die überschüssige Leistung der Gasturbogruppe 1 zum Antreiben des Kompressors 3, also zum Aufladen des Gasdruckspeichers 4 verwendet werden. Des Weiteren kann der Generator 2 als Elektromotor betrieben werden, um bei stehender Gasturbogruppe 1 den Kompressor 3 und/oder die Gasturbogruppe 1 anzutreiben. Durch die erfindungsgemäße Kombination und teilweise Integration der Gasspeicherkraftanlage bzw. von wesentlichen Komponenten der Gasspeicherkraftanlage mit der Gasturbogruppe 1 ergeben sich erhebliche synergetische Effekte, welche insbesondere die Installationskosten einer derartigen Anlage reduzieren können. Gleichzeitig kann der energetische Wirkungsgrad für die Gesamtanlage angehoben werden, insbesondere wenn durch direkte Leistungsübertragung Umwandlungsverluste vermieden werden können.

### Bezugszeichenliste

- 1: Gasturbogruppe
- 2: Generator
- 3: Kompressor
- 4: Druckgasspeicher
- 5: Kühleinrichtung
- 6: Absperr- und/oder Drosselorgan
- 7: Elektromotor
- 8: Kraftmaschine
- 9: Kupplung
- 10: Kupplung
- 11: Kupplung
- 12: zusätzliche Wärmezuführeinrichtung
- 13: Wärmetauscher
- 14: Gasspeicherturbine
- 15: Absperr- und Stellorgan
- 21: Dampfturbine
- 22: Vorwärmer
- 23: Verdampfer/Überhitzer
- 24: Kondensatpumpe
- 25: Kesselspeisepumpe
- 27: Frischdampfregelventil
- 28: Kühler/Kondensator
- 31: Kompressor
- 32: Kompressor
- 71: Elektromotor
- 72: Elektromotor
- 100: Verbindungsleitung
- 101: Verdichter
- 102: Wärmezuführeinrichtung/Brennkammer
- 103: Gasturbine
- 104: Welle/Wellenstrang

## Patentansprüche

1. Kraftwerksanlage, insbesondere zur Stromerzeugung, umfassend:
- eine Gasturbogruppe (1) mit wenigstes je einer Turbine (103) und einem Verdichter (101), welche auf einer gemeinsamen Welle (104) angeordnet sind, und einer in einem Strömungsweg vom Verdichter (101) zur Turbine (103) angeordneten Einrichtung (102) zur Wärmezufuhr, insbesondere eine Brennkammer;
- einen Druckgasspeicher (4); und
- eine Verbindungsleitung (100) mit einem Absperr- und/oder Drosselorgan (6), welche von dem Druckgasspeicher (4) abzweigt und in einen Strömungspfad der Gasturbogruppe (1) mündet.

2. Kraftwerksanlage nach Anspruch 1, **dadurch gekennzeichnet, dass** die Verbindungsleitung (100) stromab des Verdichters (101) und stromauf der Wärmezuführeinrichtung (102) in den Strömungsweg der Gasturbogruppe (1) mündet.

3. Kraftwerksanlage nach einem der vorstehenden Ansprüche, **dadurch gekennzeichnet, dass** die Verbindungsleitung (100) in ein Kühlgassystem der Gasturbogruppe (1) mündet.

4. Kraftwerksanlage nach einem der vorstehenden Ansprüche, **dadurch gekennzeichnet, dass** mit dem Druckgasspeicher (4) ein Kompressor (3) zum Aufladen des Druckgasspeichers (4) verbunden ist.

5. Kraftwerksanlage nach Anspruch 4, **dadurch gekennzeichnet, dass** der Kompressor (3) auf einem gemeinsamen Wellenstrang (104) mit der Gasturbogruppe (1), mit einer zwischengeordneten Kupplung (10) und/oder mit einem zwischengeordneten Getriebe, angeordnet und somit von der Gasturbogruppe (1) antreibbar ist.

6. Kraftwerksanlage nach Anspruch 4 oder 5, **dadurch gekennzeichnet, dass** der Kompressor (3) mit einem Elektromotor (7, 8), gegebenenfalls über eine Kupplung und/oder ein Getriebe, verbunden ist.

7. Kraftwerksanlage nach Anspruch 4 bis 6, **dadurch gekennzeichnet, dass** der Kompressor (3) mit einer Kraftmaschine (8), insbesondere einer Verbrennungskraftmaschine, beispielsweise Dieselmotor, gegebenenfalls über eine Kupplung (9) und/oder ein Getriebe, verbunden ist.

8. Kraftwerksanlage nach einem der Ansprüche 1 bis 7, **dadurch gekennzeichnet, dass** eine zusätzliche Einrichtung (12; 13) zur Wärmezufuhr in den aus dem Druckgasspeicher (4) abgezweigten Gasstrom in der Verbindungsleitung (100) stromauf deren Einmündung in den Strömungsweg der Gasturbogruppe (1) angeordnet ist.

9. Kraftwerksanlage nach Anspruch 8, **dadurch gekennzeichnet, dass** die Zusatzwärmezuführungseinrichtung eine zusätzliche Brennkammer (12) oder ein im Abgaspfad der Turbine (103) angeordneter Abgaswärmetauscher (13) ist.

10. Kraftwerksanlage nach den Ansprüchen 1 bis 9, **dadurch gekennzeichnet, dass** eine zusätzliche Turbine (14) vorgesehen ist, die mit dem gespeicherten Druckgas antreibbar ist, an die Verbindungsleitung (100) angeschlossen ist und mit der Welle (104) der Gasturbogruppe (1) antriebsverbunden oder über eine Kupplung (10) und/oder ein Getriebe antriebsverbindbar ist.

11. Kraftwerksanlage nach einem der Ansprüche 1 bis 10, **dadurch gekennzeichnet, dass** eine Dampfturbine (21) vorgesehen ist, die mit der Welle (104) der Gasturbogruppe (1) antriebsverbunden oder über eine Kupplung (10) und/oder ein Getriebe antriebsverbindbar ist.

12. Kraftwerksanlage nach Anspruch 11, **dadurch gekennzeichnet, dass** ein gemeinsamer Kühler (28) zum Kühlen des dem Druckgasspeicher (4) zugeführten komprimierten Gasstroms und des von der Dampfturbine (21) kommenden entspannten Dampfstroms vorgesehen ist.

13. Verfahren zum Betrieb einer Gasturbogruppe (1) nach einem der vorstehenden Ansprüche, bei dem zum Erhöhen der Netto-Leistungsabgabe ein Gasmassenstrom aus dem Druckgasspeicher (4) entnommen und stromab des Verdichters (101) in die Gasturbogruppe (1) eingeleitet wird.

14. Verfahren nach Anspruch 13, **dadurch gekennzeichnet, dass** die Wärmezufuhr zum Arbeitsmittel der Gasturbogruppe (1), insbesondere die Brennstoffzufuhr zur Brennkammer (102), auf eine Konstanthaltung der Turbineneintrittstemperatur geregelt wird.

15. Verfahren nach einem der Ansprüche 13 oder 14, **dadurch gekennzeichnet, dass** wenigstens ein Teilstrom des dem Druckgasspeicher (4) entnommenen Massenstroms stromab des Verdichters (101) und stromauf der Wärmeeinrichtung (102) in den Strömungsweg der Gasturbogruppe (1) eingeleitet wird.

16. Verfahren nach einem der Ansprüche 13 bis 15, **dadurch gekennzeichnet, dass** wenigstens ein Teilstrom des dem Druckgasspeicher (4) entnommenen Massenstroms in einen Kühlgaspfad der Gasturbogruppe (1) eingeleitet wird.

17. Verfahren nach einem der Ansprüche 13 bis 16, **dadurch gekennzeichnet, dass** eine verstellbare Vorleitreihe des Verdichters (101) teilweise geschlossen wird, um den vom Verdichter (101) geförderten Massenstrom und damit die Leistungsaufnahme des Verdichters (101) zu vermindern.

18. Verfahren nach Anspruch 17, **dadurch gekennzeichnet, dass** der Massenstrom durch die Turbine (103) auf Konstanthaltung geregelt wird.

19. Verfahren nach Anspruch 18, **gekennzeichnet durch** die Schritte
eine Turbineneintrittstemperatur fortwährend zu bestimmen;
einen Verdichterenddruck fortwährend zu bestimmen; einen Massenstrom aus dem Druckgasspeicher (4) zu entnehmen; die Turbineneintrittstemperatur **durch** Regeleingriffe auf die Wärmezufuhr in der Wärmezuführeinrichtung (102) auf einen konstanten Sollwert zu regeln;
den Verdichterenddruck **durch** Regeleingriffe auf die Stellung einer verstellbaren Vorleitreihe auf einen konstanten Sollwert zu regeln, indem die Vorleitreihe weiter geschlossen wird, wenn der Ist-Druck größer als der Soll-Druck ist, und die Vorleitreihe weiter geöffnet wird, wenn der Ist-Druck kleiner als der Soll-Druck ist.

20. Verfahren nach einem der Ansprüche 13 bis 19, **gekennzeichnet durch** die Schritte, dass bei einer Elektrizitätsnachfrage, welche kleiner als ein unterer Schwellenwert ist, ein Kompressor (3) **durch** einen Elektromotor (7) oder unmittelbar von der Gasturbogruppe (1) angetrieben und der Druckgasspeicher (4) aufgeladen wird, bis dessen Druck einen oberen Schwellenwert erreicht hat, und dass bei einer Elektrizitätsnachfrage, welche größer als ein oberer Schwellenwert ist, Gas aus dem Druckgasspeicher (4) in die Gasturbogruppe (1) geleitet wird.

21. Verfahren nach einem der Ansprüche 13 bis 20, **dadurch gekennzeichnet** durch die Schritte, einen unteren Schwellenwert des Druckes des Druckgasspeichers (4) zu definieren und bei Unterschreiten des Schwellenwertes einen Kompressor (3) durch eine externe Kraftmaschine (7, 8), insbesondere einen Elektromotor oder einen Dieselmotor, anzutreiben und den Druckgasspeicher (4) somit aufzuladen.

22. Verfahren nach einem der Ansprüche 13 bis 21, **gekennzeichnet durch** die Schritte
bei Stillstand der Gasturbogruppe (1) Gas aus dem Druckgasspeicher (4) in die Gasturbogruppe (1) einzuleiten und damit die Turbine (103) anzutreiben und den Wellenstrang (104) der Gasturbogruppe (1) zu beschleunigen;
die Wärmezufuhr zum Arbeitsmedium der Gasturbogruppe (1) in Betrieb zu nehmen;
die Gasturbogruppe (1) weiter bis zur Nenndrehzahl zu beschleunigen, wobei der dem Druckgasspeicher (4) entnommene Massenstrom so geregelt wird, dass die in der Turbine (103) abgegebene Leistung stets ausreicht, um eine vorgegebene Wellenbeschleunigung wenigstens einzuhalten.

23. Verfahren nach Anspruch 22, **gekennzeichnet durch** den weiteren Schritt, vor dem Einleiten von Gas in die Gasturbogruppe (1) eine externe Kraftmaschine (7, 8), vorzugsweise einen Elektromotor oder einen Dieselmotor, in Betrieb zu nehmen, mit diesem einen Kompressor (3) anzutreiben und das Speichervolumen auf einen Mindestdruck aufzuladen.

24. Verfahren nach einem der Ansprüche 13 bis 23, **dadurch gekennzeichnet, dass** der durch die Turbine (103) durchgesetzte Gasmassenstrom größer ist als der vom Verdichter (101) gelieferte Massenstrom zuzüglich dem Brennstoffmassenstrom und einem gegebenenfalls insbesondere zur Stickoxidreduktion eingedüsten Wasser- und/oder Dampfmassenstrom.

25. Verfahren nach Anspruch 24, **dadurch gekennzeichnet, dass** der Verdichtermassenstrom gegenüber dem Nennmassenstrom reduziert wird, beispielsweise durch teilweises Schließen einer verstellbaren Vorleitreihe, und dass der aus dem Druckgasspeicher (4) zugeführte Massenstrom größer ist als die Massenstromreduktion des Verdichters.
